# DEMANDE DE BREVET EUROPEEN

(11) **EP 2 736 177 A1**
(43) Date de publication de la demande: **28.05.2014**
(21) Numéro de dépôt: 13190678.6
(22) Date de dépôt: 29.10.2013
(51) Int. Cl.: H04B 3/56

(54) **Système de communication à courant porteur en ligne utilisant un transformateur basse tension/moyenne tension d'un réseau de distribution électrique**

(30) Priorité: 21.11.2012 FR 1261051
(71) Demandeur: Nexans, 75008 Paris (FR)
(72) Inventeur: De Ridder, Eduard, B-9310 Herdersem-Aalst (BE); Halgrain, Rémi, 08000 Charleville-Mézières (FR); Schuhmacher, Borja Thomas, 43007 Tarragona (ES)
(74) Mandataire: Hervouet, Sylvie

(57) **Abrégé**

L'invention concerne un système de communication à courant porteur en ligne dans lequel un transformateur (8) basse tension/moyenne tension existant du réseau de distribution d'énergie électrique reliant au moins une ligne (A, B, C) à moyenne tension à au moins une ligne (a, b, c) à basse tension, comprend un boîtier (80) relié à la terre par un conducteur (9) de terre à moyenne tension, et le système de communication comporte un équipement modem (10) à courant porteur en ligne apte à prélever ou injecter un signal de données CPL sur au moins une ligne (A, B, C) à moyenne tension du réseau de distribution d'énergie électrique au travers du boîtier (8). Selon l'invention, le système de communication comporte un dispositif (11) de blocage connecté en série sur ledit conducteur (9) de terre à moyenne tension, aux bornes duquel l'équipement modem (10) à courant porteur en ligne est connecté, le dispositif (11) de blocage présentant une impédance empêchant tout signal de données CPL d'aller vers la terre.

## Description

La présente invention concerne de manière générale l'utilisation du réseau de distribution électrique pour le transfert de signaux de données dans un système de communication à courant porteur en ligne.

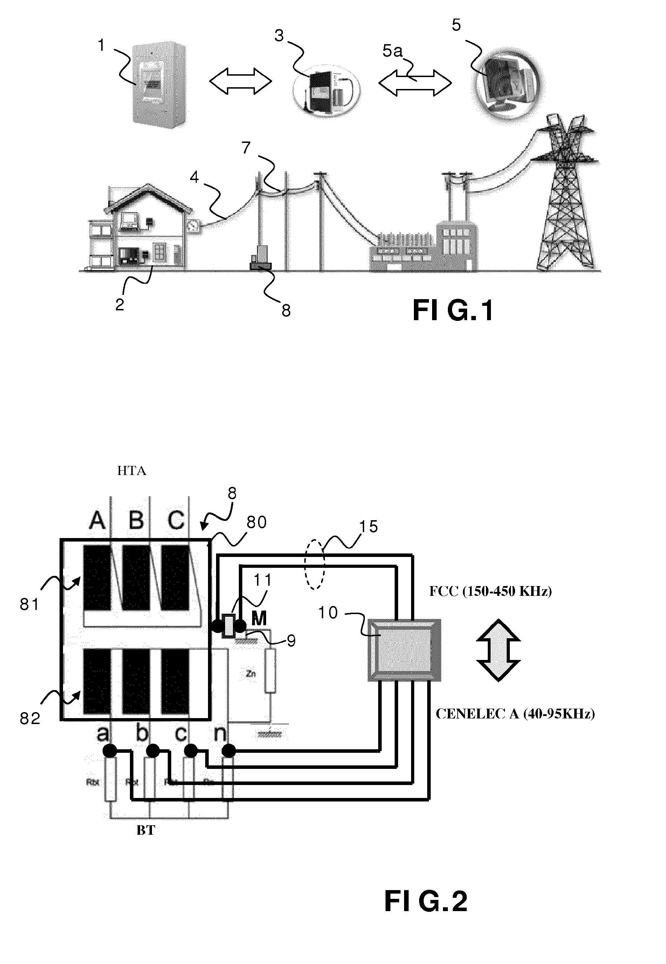

Un domaine d'application non limitatif de l'invention concerne les systèmes de télé relèves de compteurs d'énergie, en particulier des compteurs d'électricité. Certains fournisseurs d'électricité sont aujourd'hui en cours de déploiement de systèmes utilisant les lignes électriques du réseau de distribution électrique pour permettre une communication de données, de préférence bidirectionnelle, entre les compteurs d'électricité installés chez les utilisateurs et des concentrateurs chargés de collecter les données d'un ensemble de compteurs. La figure 1 donne schématiquement la configuration d'un tel système, en indiquant dans la partie haute de la figure la couche de communication du système en regard de la couche physique d'un réseau de distribution d'énergie : Un compteur électrique 1 situé au domicile 2 d'un utilisateur échange des données avec un concentrateur 3 en utilisant les lignes électriques 4 à basse tension (typiquement entre 220 et 400 Volts) du réseau de distribution électrique. Cette technologie dite CPL (pour Courant Porteur en Ligne) consiste à superposer au signal électrique basse fréquence du réseau de distribution électrique (typiquement 50 Hz en France, ou 60 Hz aux Etats-Unis) un signal de faible énergie à plus haute fréquence, par exemple dans la bande de fréquence dite CENELEC A (de 10 KHz à 95 KHz). Lorsque le concentrateur 3 reçoit les données de différents compteurs 1, il les décode grâce à un modem CPL adapté, et les traite en vue de leur retransmission à un serveur central 5 du distributeur d'énergie par tout réseau de communication étendu WAN 6 approprié.

Outre le concentrateur, des équipements complémentaires peuvent être ajoutés au niveau de la portion moyenne tension du réseau de distribution électrique. En particulier, comme le signal CPL faiblit avec la distance, il peut être nécessaire de le régénérer lorsque le concentrateur est trop éloigné. Pour ce faire, il peut être nécessaire de rajouter un, voire plusieurs répéteurs (non représentés) pour régénérer le signal CPL autant de fois que nécessaire jusqu'au concentrateur 3.

Les concentrateurs sont généralement des équipements coûteux comprenant un microcontrôleur, une mémoire, autant de modems CPL qu'il y a de phases dans le réseau de distribution, un modem de type GPRS, un modem de type Ethernet, une alimentation, et une batterie.

Leur utilisation n'est donc pas rentable dans les régions à faible densité démographique, compte tenu du peu d'habitations généralement reliées à chaque transformateur 8 basse tension/moyenne tension du réseau de distribution électrique. En outre, un abonnement mensuel auprès d'un opérateur de télécommunication est nécessaire pour pouvoir utiliser le réseau de communication GPRS. Par ailleurs, un des problèmes liés au GPRS concerne sa limitation en débit de données, peu adaptée pour une application dans laquelle des milliers de données doivent être récoltées périodiquement.

Une première solution a été proposée pour réduire le nombre de concentrateurs, consistant à utiliser un dispositif de couplage CPL pour transférer les signaux de données au niveau de chaque poste transformateur basse tension/moyenne tension entre les lignes basse tension et les lignes moyenne tension. Le dispositif de couplage, généralement de type capacitif, permet le passage du signal CPL tout en rejetant la fréquence du réseau électrique, et protège l'équipement contre la tension du réseau électrique et les tensions transitoires qui pourraient résulter d'opérations de commutation. Cette solution reste néanmoins coûteuse car l'installation de chaque dispositif de couplage CPL sur la ligne moyenne tension est plus chère que le prix d'un concentrateur, compte tenu du fait que la ligne moyenne tension doit être coupée pendant l'installation, pour des questions de sécurité.

Une autre solution connue notamment du document AU-B-27018/88 propose d'utiliser le boîtier du transformateur basse tension/moyenne tension, et plus exactement la capacité parasite formée entre le boîtier et les enroulements primaires (côté moyenne tension) du transformateur, comme dispositif de couplage CPL. Plus précisément, l'architecture proposée dans ce document comprend un transformateur classique basse tension/moyenne tension pour un réseau de distribution triphasé, le transformateur reliant trois lignes à basse tension à trois lignes à moyenne tension. La solution de couplage CPL proposée repose sur le fait que d'une part, les lignes à basse tension sont reliées à un neutre électrique commun par un conducteur de neutre basse tension, et que d'autre part, le boîtier du transformateur basse tension/moyenne tension est relié à la terre par un conducteur de terre moyenne tension distinct du conducteur de neutre basse tension. Ainsi, il est possible selon ce document d'injecter un signal de données fourni par un modulateur CPL (respectivement de prélever un signal de données à fournir à un démodulateur CPL) soit entre le conducteur de neutre basse tension et le conducteur de terre haute tension, soit directement sur le conducteur de terre haute tension. Dans ce dernier cas, un dispositif de couplage de type inductif reste nécessaire pour coupler le modem CPL au conducteur de terre haute tension.

Une telle solution est cependant inadaptée dans toutes les architectures dans lesquelles le conducteur de neutre basse tension et le conducteur de terre basse tension ne sont pas des conducteurs distincts. En outre, même dans le cas où les conducteurs sont distincts, des études ont montrées que la solution ne marchait pas correctement, typiquement dans des pays comme la France, probablement du fait que la résistance entre ces deux conducteurs n'est pas assez importante. En conséquence, une partie non négligeable du signal PLC que l'on souhaite injecter sur le réseau moyenne tension va en fait à la terre. Il en va de même lorsque l'on souhaite prélever un signal PLC venant des lignes à moyenne tension.

La présente invention a pour but de pallier les limitations des solutions connues en proposant une solution simple et peu coûteuse pour injecter/prélever un signal CPL sur une ligne moyenne tension du réseau électrique de distribution.

Pour ce faire, l'invention a pour objet un système de communication à courant porteur en ligne dans un réseau de distribution d'énergie électrique comportant un transformateur basse tension/moyenne tension reliant au moins une ligne à moyenne tension à au moins une ligne à basse tension, le transformateur basse tension/moyenne tension comprenant un boîtier relié à la terre par un conducteur de terre à moyenne tension, le système de communication étant du type comportant un équipement modem à courant porteur en ligne apte à prélever ou injecter un signal de données CPL sur au moins une ligne à moyenne tension du réseau de distribution d'énergie électrique au travers du boîtier, le système de communication étant **caractérisé en ce qu'il** comporte un dispositif de blocage connecté en série sur ledit conducteur de terre à moyenne tension, aux bornes duquel l'équipement modem à courant porteur en ligne est connecté, le dispositif de blocage présentant une impédance empêchant tout signal de données CPL d'aller vers la terre.

Selon d'autres particularités possibles du système :
- le dispositif de blocage comporte une ferrite autour de laquelle est entouré un câble dont les deux extrémités sont aptes à être connectées sur le conducteur de terre à moyenne tension, et deux conducteurs aptes à être connectés à l'équipement modem à courant porteur en ligne ;
- la ferrite st de préférence sous forme d'un anneau autour duquel une partie dudit câble est enroulée sous forme de spires de sorte que les axes desdites spires soient sensiblement perpendiculaires à l'axe de l'anneau ;
- l'équipement modem à courant porteur en ligne est de préférence apte à recevoir/délivrer des signaux de données CPL dans une première bande de fréquence d'un ou à un équipement de communication situé du côté du réseau basse tension, et à injecter/prélever des signaux de données CPL dans une deuxième bande de fréquence sur ladite au moins une ligne à moyenne tension du réseau de distribution d'énergie électrique. On s'affranchit ainsi du problème de pollution due au couplage naturel entre les enroulements du transformateur basse tension/moyenne tension ; la première bande de fréquence est par exemple la bande CENELEC A, et la deuxième bande de fréquence est par exemple la bande FCC ;
- dans ce cas, l'équipement modem à courant porteur en ligne comprend avantageusement des moyens de régulation dynamique de la puissance des signaux de données PLC dans la deuxième bande de fréquence susceptibles d'être présents du côté de la basse tension ; ces moyens de régulation dynamique comportent par exemple un moyen de mesure de l'amplitude desdits signaux de données PLC dans la deuxième bande de fréquence susceptibles d'être présents du côté de la basse tension, et un module de compensation apte à réduire, respectivement à augmenter, la puissance des signaux de données PLC émis ou reçus par l'équipement modem à courant porteur en ligne selon que l'amplitude mesurée est supérieure, respectivement inférieure, à une valeur seuil.

L'invention sous ses différents aspects sera mieux comprise au vu de la description suivante non limitative d'un système apte à la télé relève de compteurs électriques, faite en référence aux figures annexées, dans lesquelles :
- la figure 1 déjà décrite illustre schématiquement l'architecture d'un système connu de télé relève de compteurs électriques utilisant le réseau de distribution d'énergie électrique ;
- la figure 2 déjà décrite illustre schématiquement le principe de couplage préconisé selon un premier mode de réalisation possible de l'invention ;
- la figure 3 représente un boîtier en position ouverte, un mode de réalisation préféré du dispositif de blocage utilisé conformément à l'invention ;
- la figure 4 illustre schématiquement un mode de réalisation possible pour l'équipement modem CPL utilisé conformément à l'invention ;
- la figure 5 représente l'installation du système de communication sur un poteau existant du réseau de distribution d'énergie électrique.

Dans la suite de la description, on considère, à titre d'exemple non limitatif, que les signaux CPL sont échangés entre une pluralité de compteurs électriques installés chez des particuliers ou des entreprises, au niveau du réseau basse tension, et le distributeur d'énergie électrique, en passant par les lignes à moyenne tension.

Sur la figure 2, la référence 8 désigne un transformateur basse tension/moyenne tension classique du réseau de distribution électrique triphasé. Le transformateur 8 comprend un boîtier 80 relié à la terre par un conducteur de terre 9 à moyenne tension. Le boîtier 80 renferme des enroulements primaires 81 reliés aux trois lignes à moyenne tension A, B et C du réseau, et des enroulements secondaires 82 reliés aux trois lignes à basse tension a, b et c et au conducteur de neutre n du réseau électrique.

Comme dans le cas du document AU-B-27018/88, le système de communication à courant porteur en ligne utilise un équipement modem CPL 10 connecté d'une part, aux trois conducteurs a, b, c et au conducteur neutre n du côté basse tension, et d'autre part, au boîtier 80 du transformateur 8, de façon à utiliser les capacités parasites entre les enroulements primaires 81 et le boîtier 80 pour coupler l'équipement modem CPL 10 aux lignes à moyenne tension A, B et C. L'équipement modem 10 comporte un modem CPL pour chacune des phases du réseau.

Cependant, à la différence du document AU-B-27018/88, le signal CPL est ici injecté (sens de communication des compteurs vers le distributeur d'énergie ou sens dit montant) ou prélevé (sens de communication du distributeur d'énergie vers les compteurs ou sens dit descendant) aux bornes d'un dispositif 11 de blocage, relié lui-même en série sur le conducteur 9 de terre moyenne tension, ce dispositif de blocage présentant une impédance suffisamment importante à la fréquence du signal CPL provenant soit de la partie moyenne tension du réseau, soit de la sortie de l'équipement modem 10, pour empêcher ce signal CPL d'aller vers la terre. Ainsi, pour une communication descendante, les signaux CPL issus du boîtier 80 du transformateur sont transmis sans perte à l'équipement modem CPL 10. De même, pour une communication descendante, les signaux CPL issus de l'équipement modem CPL 10 sont transmis sans perte au boîtier 80 du transformateur.

Une simple inductance peut être utilisée pour le dispositif 11 de blocage.

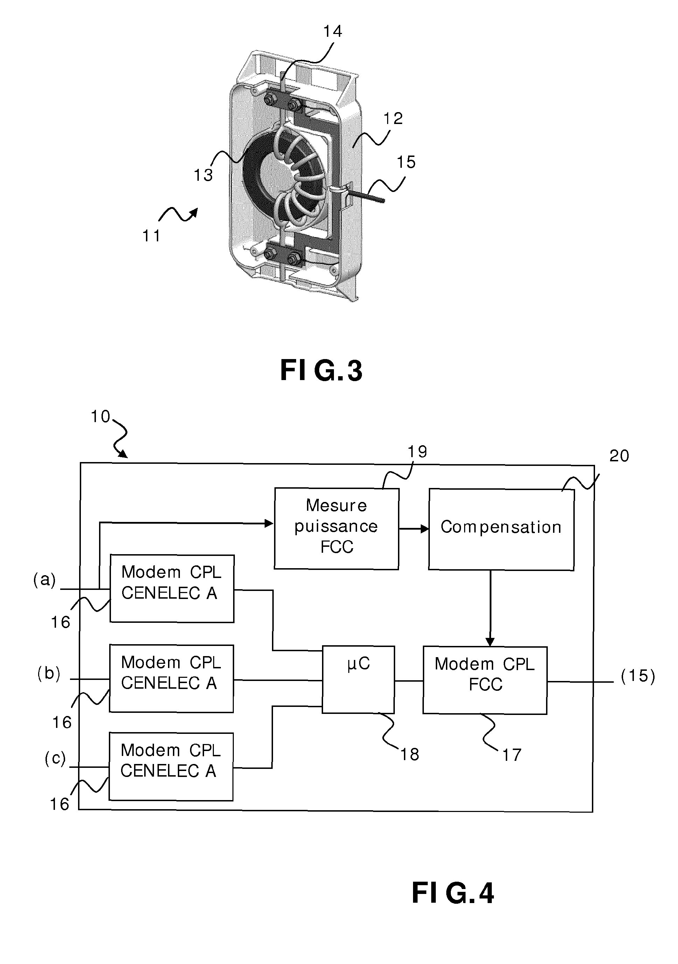

Néanmoins, le dispositif 11 de blocage est de préférence, comme illustré sur la figure 3, un dispositif distinct de l'équipement modem CPL 10, et composé d'un boîtier 12 renfermant une ferrite 13 autour de laquelle est entouré un câble 14 dont les deux extrémités servent à la connexion du dispositif 11 de blocage en série sur le conducteur 9 de terre à moyenne tension. Deux conducteurs 15 sont en outre prévus pour la connexion avec l'équipement modem CPL 10 de la figure 2. L'utilisation d'une ferrite présente à la fois l'avantage de :
- générer une impédance haute pour les fréquences CPL, agissant ainsi comme une simple inductance, de sorte à empêcher ce signal d'aller vers la terre ;
- présenter néanmoins une impédance faible à la fréquence du réseau électrique (50 ou 60Hz) et en cas de surcharges ponctuelles en courant, typiquement en cas de foudre. En effet, la ferrite sature et devient invisible pour des forts courants reçus à la fréquence du réseau. Ainsi, en cas de foudre ou de défaut, l'ensemble constitué par le câble 14 entouré autour de la ferrite 13 devient transparent, de sorte que le courant peut être conduit jusqu'à la terre.

La ferrite 1 se présente de préférence sous la forme d'un anneau autour duquel une partie du câble 14 est enroulée de sorte que les axes des spires de l'enroulement ainsi formé soient sensiblement perpendiculaires à l'axe de l'anneau.

On a vu précédem ment que la transmission des signaux CPL s'effectue sans perte entre le boîtier 80 du transformateur basse tension/moyenne tension 8 et l'équipement modem CPL 10. En revanche, du fait du couplage capacitif naturel qui existe entre les enroulements primaires 81 et les enroulements secondaires 82 du transformateur 8 basse tension/moyenne tension, une partie du signal CPL reçu par les enroulements primaires 81 lors d'une communication descendante va parvenir sur les conducteurs a, b et c via les enroulements secondaires 82. De même, une partie du signal reçu par les enroulements secondaires 82 lors d'une communication montante va parvenir sur les conducteurs A, B et C via l'enroulement primaire 81. Dans les deux cas, le signal CPL sera plus ou moins atténué selon le type du transformateur 8 basse tension/moyenne tension, et les impédances de charge sur la partie basse tension et sur la partie moyenne tension du réseau de distribution électrique. Le débit global du système risque ainsi d'être réduit et le nombre de collisions entre paquets d'information transmise risque d'augmenter. Une solution à ce problème de pollution pourrait être d'utiliser des filtres passifs du côté des lignes à basse tension. Cette solution serait néanmoins coûteuse. Dans une solution préférée de l'invention, on choisit avantageusement de faire fonctionner l'équipement modem CPL 10 dans une première bande de fréquences, par exemple dans la bande CENELEC A (40 - 95 KHz) du côté de la basse tension, et dans une deuxième bande de fréquences plus élevées, par exemple la bande FCC (150 KHz - 450 KHz) du côté de la moyenne tension.

En d'autres termes, comme illustré schématiquement sur la figure 4, l'équipement modem CPL 10 comprend trois modems CPL 16 identiques fonctionnant dans la première bande de fréquence, et aptes à être connectés aux conducteurs a, b, c de la basse tension, et un quatrième modem CPL 17 fonctionnant dans la deuxième bande de fréquence, et apte à être connecté aux bornes du dispositif de blocage 11 via les conducteurs 15, le tout étant commandé par un microcontrôleur 18.

Par ailleurs, toujours à cause du couplage naturel qui existe entre les enroulements primaires 81 et les enroulements secondaires 82 du transformateur 8, mais aussi du couplage entre le boîtier 80 et les enroulements primaires 81, une partie du signal CPL provenant de l'équipement modem 10 et traversant le boîtier 80 se retrouve réinjectée dans la basse tension via les deux enroulements au lieu de parvenir intégralement sur les conducteurs A,B et C. Cela peut devenir problématique lorsque cette partie réinjectée devient plus importante que l'amplitude autorisée pour les signaux au niveau des lignes à basse tension. Pour éviter cette pollution due aux interférences électromagnétiques, l'équipement modem CPL 10 comprend de préférence des moyens de régulation dynamique de la puissance des signaux à la deuxième fréquence présents du côté de la basse tension. Comme représenté sur la figure 4, ces moyens peuvent par exemple comporter un moyen 19 de mesure de l'amplitude des signaux reçus en entrée de chaque modem 16 (ou en sortie de ces modems, mais avant conversion à la deuxième fréquence), et un module 20 de compensation qui permet de réduire, respectivement d'augmenter, la puissance de transmission et de réception du modem 17 selon que l'amplitude mesurée est supérieure, respectivement inférieure, à une valeur seuil. Pour ne pas surcharger la figure 4, les moyens de régulation ont été représentés seulement pour un modem CPL 16.

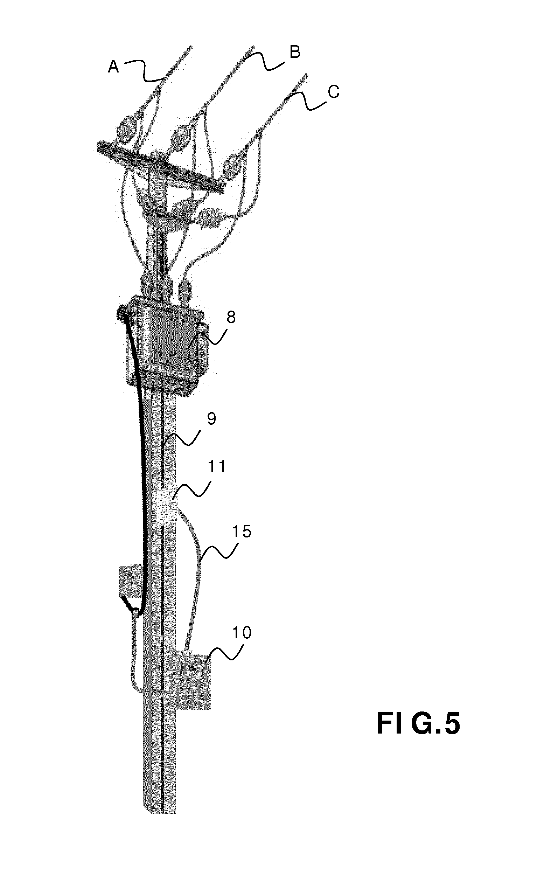

Grâce à l'architecture selon l'invention, il est très facile de déployer les différents équipements modem CPL 10 et les dispositifs de blocage 11. La figure 5 illustre l'installation du système sur un poteau déjà muni d'un transformateur 8 basse tension/moyenne tension existant : Il suffit de connecter le dispositif de blocage 11 sur le conducteur 9 de mise à la terre moyenne tension, et de lui connecter l'équipement modem CPL 10 via les conducteurs 15. Les équipements nécessaires sont en outre bien moins coûteux qu'un concentrateur et moins consommateurs d'énergie. On utilise de bout en bout le courant porteur en ligne, éventuellement en répétant le signal au niveau de chaque transformateur, ce qui permet de s'affranchir des inconvénients liés à l'utilisation du réseau GPRS.

L'invention a été décrite essentiellement dans son application à un système de télé relève de compteurs électriques, mais peut bien entendu être appliquée à d'autres fins, par exemple dans un système de surveillance du réseau de distribution électrique comprenant des capteurs et des équipements transmettant les données captées par courant porteur en ligne. On peut ainsi envisager que l'équipement modem 10 ne soit pas, comme dans le cas représenté sur la figure 2, connecté aux conducteurs a, b, c et n du réseau électrique basse tension, mais à tout autre équipement tel qu'un capteur de mesure. Les intérêts présentés d'une part, par l'utilisation du dispositif de blocage 11, et d'autre part, pour l'utilisation de deux bandes de fréquences distinctes, ainsi que de la régulation dynamique de puissance restent présents pour ces autres applications.

## Revendications

1. Système de communication à courant porteur en ligne dans un réseau de distribution d'énergie électrique comportant un transformateur (8) basse tension/moyenne tension reliant au moins une ligne (A, B, C) à moyenne tension à au moins une ligne (a, b, c) à basse tension, le transformateur (8) basse tension/moyenne tension comprenant un boîtier (80) relié à la terre par un conducteur (9) de terre à moyenne tension, le système de communication étant du type comportant un équipement modem (10) à courant porteur en ligne apte à prélever ou injecter un signal de données CPL sur au moins une ligne (A, B, C) à moyenne tension du réseau de distribution d'énergie électrique au travers du boîtier (8), le système de communication étant **caractérisé en ce qu'il** comporte un dispositif (11) de blocage connecté en série sur ledit conducteur (9) de terre à moyenne tension, aux bornes duquel l'équipement modem (10) à courant porteur en ligne est connecté, le dispositif (11) de blocage présentant une impédance empêchant tout signal de données CPL d'aller vers la terre.

2. Système de communication à courant porteur en ligne selon la revendication 1, **caractérisé en ce que** le dispositif (11) de blocage comporte une ferrite (13) autour de laquelle est entouré un câble (14) dont les deux extrémités sont aptes à être connectées sur le conducteur (9) de terre à moyenne tension, et deux conducteurs (15) aptes à être connectés à l'équipement modem (10) à courant porteur en ligne.

3. Système de communication à courant porteur en ligne selon la revendication 2, **caractérisé en ce que** ladite ferrite (13) est sous forme d'un anneau autour duquel une partie dudit câble (14) est enroulée sous forme de spires de sorte que les axes desdites spires soient sensiblement perpendiculaires à l'axe de l'anneau.

4. Système de communication à courant porteur en ligne selon l'une quelconque des revendications précédentes, **caractérisé en ce que** l'équipement modem (10) à courant porteur en ligne est apte à recevoir/délivrer des signaux de données CPL dans une première bande de fréquence d'un équipement de communication situé du côté du réseau basse tension, et à injecter/prélever des signaux de données CPL dans une deuxième bande de fréquence sur ladite au moins une ligne (A, B, C) à moyenne tension du réseau de distribution d'énergie électrique.

5. Système de communication à courant porteur en ligne selon la revendication 4, **caractérisé en ce que** la première bande de fréquence est la bande CENELEC A.

6. Système de communication à courant porteur en ligne selon l'une quelconque des revendications 4 et 5, **caractérisé en ce que** la deuxième bande de fréquence est la bande FCC.

7. Système de communication à courant porteur en ligne selon l'une quelconque des revendications 4 à 6, **caractérisé en ce que** l'équipement modem (10) à courant porteur en ligne comprend des moyens (19, 20) de régulation dynamique de la puissance des signaux de données PLC dans la deuxième bande de fréquence susceptibles d'être présents du côté de la basse tension.

8. Système de communication à courant porteur en ligne selon la revendication 7, **caractérisé en ce que** lesdits moyens de régulation dynamique comportent un moyen (19) de mesure de l'amplitude desdits signaux de données PLC dans la deuxième bande de fréquence susceptibles d'être présents du côté de la basse tension, et un module (20) de compensation apte à réduire, respectivement à augmenter, la puissance des signaux de données PLC émis ou reçus par l'équipement modem (10) à courant porteur en ligne selon que l'amplitude mesurée est supérieure, respectivement inférieure, à une valeur seuil.

9. Système de communication à courant porteur en ligne selon l'une quelconque des revendications précédentes, **caractérisé en ce que** ledit équipement modem (10) à courant porteur en ligne est un répéteur d'un système de télé relève de compteurs électriques connectés à au moins une ligne (a, b, c) à basse tension du réseau de distribution d'énergie électrique, le système de communication étant utilisé notamment pour permettre l'échange de données entre lesdits compteurs électriques et un fournisseur d'énergie électrique.

10. Système de communication à courant porteur en ligne selon les revendications 4 et 8 prises en combinaison, **caractérisé en ce que**, le réseau de distribution d'énergie électrique étant un réseau triphasé, ledit équipement modem (10) à courant porteur en ligne comporte trois modems CPL (16) fonctionnant dans la première bande de fréquence, chacun étant connecté à une des trois lignes (a, b, c) à basse tension, et un modem CPL (17) fonctionnant dans la deuxième bande de fréquence.

11. Système de communication à courant porteur en ligne selon l'une quelconque des revendications 1 à 8, **caractérisé en ce que** ledit équipement modem (10) à courant porteur en ligne est un répéteur d'un système de surveillance, le système de communication étant utilisé notamment pour permettre l'échange de données avec un capteur de mesure.

12. Système de communication à courant porteur en ligne selon l'une quelconques des revendications précédentes, **caractérisé en ce que** ledit équipement modem (10) à courant porteur en ligne et ledit dispositif (11) de blocage sont aptes à être installés sur un poteau électrique portant le transformateur (8) basse tension/moyenne tension du réseau électrique de distribution.
